# EUROPEAN PATENT APPLICATION

(11) **EP 0 742 094 A1**
(43) Date of publication of application: **13.11.1996**
(21) Application number: 95906478.3
(22) Date of filing: 18.01.1995
(51) Int. Cl.: B29C 49/48, B29C 49/50

(54) **BLOW MOLDING DIE AND METHOD OF MANUFACTURING SAME**

(30) Priority: 28.01.1994 JP 8428/94
(71) Applicant: Asahi Kasei Kogyo Kabushiki Kaisha, Osaka-shi Osaka 530 (JP)
(72) Inventor: KOBAYASHI, Satoshi, Chiba 273 (JP)
(74) Representative: Koepe, Gerd L., Dipl.-Chem.
(86) International application number: JP9500039
(87) International publication number: WO9520478

(57) **Abstract**

A metallic mold for blow-molding wherein at a peripheral part of a cavity established at a main body consisting of a highly thermally conductive metal, a layer of a highly hard metal metallurgically bonded to the main body is provided, a component thereof and a method for a production thereof.

The metallic mold or the component thereof for blow-molding of the present invention makes the cooling rate of the molded article high and enables a shortened cycle for molding. The surface thereof has a highly hard metal bond, and therefore an improvement in durability of a pinch-off part thereof can be attained. Moreover, since the highly hard metal is metallurgically bonded to the whole surface of the metallic mold, no machining such as that in a nest is necessary. Therefore, the time to deliver the metallic mold can be shortened and cost of machining thereof can be reduced. Further, since a bolting necessary in case of using a nest is not necessary, a water cooling circuit can be provided at a point as near as possible to the surface of a mold cavity and the surface of a parting line, and thus a high efficiency of cooling with water can be maintained.

## Description

### Technical Field

The present invention relates to a metallic mold for blow-molding, a component thereof, and a method for the production thereof.

More specifically, the present invention relates to a metallic mold for blow-molding wherein at a peripheral part of a cavity established at a main body consisting of a highly thermal conductive metal, a layer of a highly hard metal which is metallurgically bonded to the main body is provided, to a component thereof and to a method for a production thereof.

According to the present invention, when a cut-off part is provided on at least one part of a peripheral part of the cavity, durability of the metallic mold can be improved, while an improvement of a thermal conductivity of the main body is sought.

### Background Art

Generally, a molding method of blow-molding is used in a production of a vessel or container used for a refreshment beverage, a detergent, or the like.

In a metallic mold used in this molding method, an alloy of aluminum, an alloy of zinc and an alloy of copper which have excellent thermal radiation are not seldom used generally in order to shorten the shot cycle time. However in case of this molding method, generally it is necessary to remove a burr (a protruded portion of a resin when the resin is clipped from both sides between the metallic molds), and various types of steel stocks and a stainless steel which have excellent hardness and durability are used for the part having a function of removing the portion (a part of pinch-off).

Recently, complicated and unique shapes of vessels are increasing. For instance, conventionally, the shapes have been those having a burr of a resin only at the bottom of bottles (a portion of a parison tail) [a shape such as those of common bottles of shampoo]. However, for instance, as can be seen in bottles generating a burr also at a shoulder thereof as is exemplified by pumping type large bottles of shampoo, and in bottles generating a burr at or around a handgrip as is exemplified by bottles having a handgrip such as bottles of a liquid detergent, etc., shapes of bottles have become diversified depending upon the diversification of demand of consumers, and accordingly sizes and shapes of the metallic molds for molding thereof also are diversified and thus shapes of a parting line thereof also have become intricate.

In trends like this, a part of pinch-off of a metallic mold conventionally was limited to a bottom part or a neck part of the mold, but recently in some cases it is required to be located at the whole part along the parting line of the mold proper.

In this case, conventionally a method has been adopted wherein a highly hard metal to which a machining was applied to form a cut-off blade of a pinch-off part was embedded in the mold proper which was made of a highly thermally conductive metal, and was fastened with a bolt ["nest"]. However the method of "nesting" has such a problem that it incurs an increase of cost and an extension of delivery time owing to an increase of man-hours, and further it can be applied only when a peripheral part of the mold cavity and a parting line thereof have a linear shape, and cannot be applied when they have an intricate shape including a curve. The metallic mold proper consists of a pair of metallic molds split at the parting face thereof, and molded articles are produced in a state thereof being closed from both sides. However, upon the two surfaces facing each other a pressure not lower than about 10 tons is imposed to the whole of the metallic molds, and therefore when the component of a cut-off blade is a system of "a nest", this turns out to be broken down, or to incur a crucial defect to a product due to a deviation of the mold.

In this metallic mold, water cooling circuits are provided at the inner part thereof. However when a nest is set by machining of bolting a component or the like such as a cut-off blade, holes of the bolts may be feared to intersect the water cooling circuits, which therefore must be provided at a rather distant point from a surface of the metallic mold (a surface of the cavity and a surface of the parting line). This remarkably impairs the efficiency of cooling with water, and incurs a decrease of the shortening of the time for a shot cycle.

On the other hand, in a metallic mold of a large size and having a complicated shape at a peripheral part of the cavity or the parting line thereof such as a vessel for kerosene, a nest system is difficult, and therefore reluctantly, the whole of the metallic mold as one body is not seldom obtained by machining of a material proper of a highly hard metal (such as steel). However, this method is remarkably poor in thermal radiation, and therefore a molding cycle cannot be improved, which has been a cause of poor productivity.

In contrast, in Japanese Patent Publication Unexamined No. 1('89)-143738, the problem is intended to solve by making steel of the working surface of a metallic mold thin and further by backing it with copper. However, the whole of the working surface of the mold is made of steel stock, and therefore the problem of thermal radiation has not yet sufficiently been solved.

Further, Japanese Patent Publication Unexamined No. 62 ('87)-113521 discloses a device for molding a powdered resin, wherein by placing at the backside of a metal at the molding surface another metal having a thermal conductivity higher than that of the metal, the cycle of heating and cooling is purposed to improve. However the publication does not suggest a removal of burrs, for instance, in blow molding.

Japanese Patent Publication Unexamined No. 4 ('92)-101813 discloses that a cutting-off component using a cladding material is employed as a part of linear parison tail. According to the method, problems wherein the cut-off blade is broken down or the component of cutting-off is deviated are solved. However when a shape of a peripheral part of the cavity or of a parting line is not linear, it cannot be used as the component of cutting-off.

### Disclosure of the Invention

The present invention has been accomplished by paying attention to the above-described problems. An object of the present invention is to purpose an improvement of the thermal conductivity of a main body of a metallic mold and to improve durability of a cut-off blade when a cutting-off component is provided at the whole or a part such as a parting line or the like of a peripheral part of a cavity having any shape.

That is, the first of the present invention relates to a metallic mold for blow-molding wherein at a peripheral part of a cavity established at a main body consisting of a highly thermally conductive metal, a layer of a highly hard metal metallurgically bonded to the main body is provided.

The second of the present invention relates to a metallic mold for blow-molding having as a component of the metallic mold at least one component of the metallic mold wherein at a peripheral part of a cavity established at a main body consisting of a highly thermally conductive metal, a layer of a highly hard metal metallurgically bonded to the main body is provided.

The third of the present invention relates to a method for producing a metallic mold for blow-molding wherein by employing a composite material which is obtainable by metallurgically bonding a layer of a highly hard metal onto the surface of a main body of a highly thermally conductive metal, forming a cavity by digging from the side of the highly hard metal into the main body, and thereby forming a layer containing the highly hard metal at a peripheral part of the cavity.

The fourth of the present invention relates to a method for producing a component of a metallic mold for blow-molding wherein by employing a composite material which is obtainable by metallurgically bonding a layer of a highly hard metal onto the surface of a main body of a highly thermally conductive metal, forming a cavity by digging from the side of the highly hard metal into the main body, and thereby forming a layer containing the highly hard metal at a peripheral part of the cavity.

### Brief Description of Drawings

Fig. 1 shows a front view of one surface of a pair of the metallic molds of the present invention shown in Example 1.

Fig. 2 shows an AA sectional view of Fig. 1.

Fig. 3 shows a front view of one surface of a pair of the metallic molds of the present invention shown in Example 2.

Fig. 4 shows a BB sectional view of Fig. 3.

Fig. 5 shows a CC sectional view of Fig. 3.

Fig. 6 shows a front view of one surface of a pair of the metallic molds of the present invention shown in Example 3.

Fig. 7 shows a DD sectional view of Fig. 6.

Fig. 8 shows an EE sectional view of Fig. 6.

### Description of Symbols

- 1.: a main body (an alloy of aluminum)
- 2.: a layer of pure aluminum
- 3.: a layer of copper
- 4.: a layer of stainless steel
- 5.: a water cooling circuit
- 6.: a hollow part (a cavity part)
- 7.: a component of a mold (a split mold of an upper part of a bottle)
- 8.: a component of a mold (a split mold of a body part of a bottle)
- 9.: a component of a mold (a split mold of a bottom part of a bottle)
- 10.: a layer of a highly hard steel
- 11.: a layer of titanium
- 12.: a component of a mold (a split mold proper)
- 13.: a component of a mold (a nest of a bottom part: stainless steel)

### Best Mode for Carrying Out the Invention

The metallic mold according to the present invention signifies a whole metallic mold or each of a pair of symmetrical metallic molds. The component or segment of the metallic mold signifies the further split or segmenting of each of the pair of the symmetrical metallic molds, or signifies the component or segment of a split part such as a bottom bushing, a handle grip, etc.

The highly thermal conductive metal as the main body of the metallic mold or the component of the metallic mold according to the present invention is a metal having higher thermal conductivity than the conventional metallic material containing mainly steel, and it is exemplified by aluminum, an alloy of aluminum, copper, an alloy of copper, etc.

The highly hard metal according to the present invention is a metal having higher hardness (Rockwell hardness) than an alloy of aluminum, and it is exemplified by a steel, a steel suitable for a mold for a plastic molding (e.g., a prehardened steel, a hardened steel, a nitrided steel, a steel resistant to corrosion, a maraging steel, etc.), a stainless steel, titanium, an alloy of titanium, nickel, an alloy of nickel, an alloy of beryllium-copper, etc.

The cavity of the present invention has a predetermined shape, and the predetermined shape is that of a desired plastic molded article. The cavity is formed by digging from the side of a highly hard metal of a clad material into a main body of a highly thermally conductive metal.

The parting line is an outline of one section of a plastic molded article which appears on the surface of a parting face (a surface of a parting line) of a mold after the cavity is formed.

The peripheral part of the cavity means a part of the parting face outside of the parting line including the line in the parting face of a mold.

The metallurgical bonding according to the present invention signifies the bonding of two sorts of metals after they are brought as close as to the domain wherein attraction force functions between atoms, and is carried out by means of pressure bonding, for example, usually by explosive cladding, roll cladding, diffusion bonding in vacuum, friction welding, or the like. When it is difficult to metallurgically bond two different sorts of metals, they may be bonded by employing, for example, pure aluminum, titanium, nickel, copper or pure iron as an intermediate metal thereof.

As referred to above, the starting material which forms the metallic mold for blow molding according to the present invention can be, for example, a composite board of different sorts of metals wherein the layers comprising a layer of an alloy of aluminum, a layer of pure aluminum, a layer of an alloy of copper, and a layer of a stainless steel are metallurgically bonded in a plane. The means for bonding in a plane can be as follows, for instance, in a method of explosive cladding. On the surface of a stainless steel board as a base metal, a space is provided with an appropriate space supporter, and a board of an alloy of copper as a clad metal is set thereon facing to the base metal. An explosive equipped on the whole of the back surface (an upper surface) of the board of an alloy of copper is made to explode from one terminal of the explosive, for example, by an electric detonator, and thus the two boards of metals are bonded in a plane in an instant. As a result, at first, the composite board of the two layers of different sorts of metals is obtained.

Next, the composite board of the two layers of different sorts of metals as a base metal is placed with the surface of an alloy of copper as the upper surface. As described above, a space is provided with an appropriate space supporter on the upper surface, and a board of pure aluminum as a clad metal is set thereon facing to the base metal. In the same way as described above, the composite board of three layers of different sorts of metals is obtained.

Further, the composite board of the three layers of different sorts of metals as a base metal is placed with the surface of pure aluminum as the upper surface. As described above, by conducting explosive cladding of the board of an alloy of aluminum thereon, the composite board of the four layers of different sorts of metals is produced wherein the layers comprising a layer of an alloy of aluminum, a layer of pure aluminum, a layer of an alloy of copper, and a layer of a stainless steel are metallurgically bonded by a method of explosive cladding.

However, besides the way wherein the composite metallic board of multiple layers is prepared by repeating explosive cladding respectively of each of the materials as stated above, after the required spaces are provided between the respective layers of multiple layers of metallic boards which compose the desired composite boards of different sorts of metals, explosive cladding may be conducted all at once to produce the composite board of different sorts of metals, and this may be utilized as a starting material for the metallic mold for blow molding.

The description above provides an example of metallurgical bonding by explosive cladding. Besides this, the metallurgical bonding can be effected by roll cladding wherein the activated and cleaned surfaces of different sorts of metallic boards which are purposed to be bonded to each other are closely contacted, the periphery thereof is hermetically sealed, and they are rolled at a high temperature in high vacuum; diffusion bonding in vacuum wherein two sorts of metals are bonded by pressing and heating in an atmosphere of high vacuum to the region where the two metals are diffused; friction welding, and the like. In any method, the way wherein metallic layers which are purposed to be bonded to each other are laminated so as to pile up successively, or the way wherein the composite board of different sorts of metals is prepared by bonding all at once any of the different sorts of metals of multiple layers to another, or the like, may be employed.

The machining of digging into according to the present invention is the same as the conventional machinings of a mold cavity. For instance, it is a machining wherein a drawing of the metallic mold to be made is read on a NC (numerical control) tape, a NC milling is conducted from the side of a highly hard metal pursuant to the numerical control based on the data of this tape, the cavity is formed by cutting, and further an abrasion is provided by a shot blasting to the inner surface of the cut and dug cavity, lastly a finish thereof being conducted.

Moreover, as for the peripheral part of the cavity having a predetermined shape according to the present invention, concerning the part which is required to remove burrs of the resin, particularly along the parting line thereof, the highly hard metal layer is preferred to be machined like a shape of a cut-off blade.

### Examples

The present invention is explained by the following Examples by referring to Drawings, but is not to be construed as limited by the Examples.

### Example 1

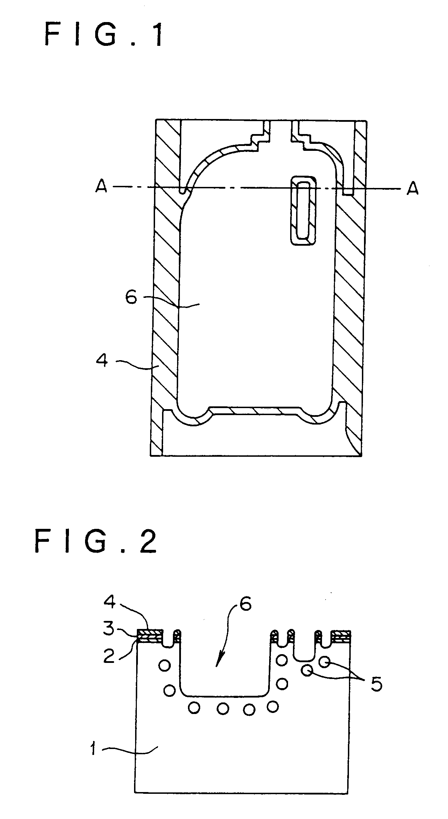

Fig. 1 shows a mold for blow molding a bottle having a handgrip. The mold is split into two symmetric metallic molds.

As shown in Fig. 2, the metallic mold is composed of four layers, wherein a main body 1 is an alloy of aluminum, and pure aluminum 2 and copper 3, as the intermediate metals are bonded thereto by explosive cladding, and further a stainless steel 4 is bonded at the most external layer.

Into a pair of surfaces facing to each other, the machining of digging to form a shape of the bottle of a product has been carried out. The peripheral parts of the cavity at the bottle-neck part, the handgrip part and the bottom part of the metallic mold retain edges of the peripheral parts (cut-off blades) for cutting burrs, whereas a layer of stainless steel at the surfaces of the other parts has been cut off and the surfaces of an alloy of aluminum are made bare. The peripheral parts of parts other than the above-described, including the body part of the bottle of the metallic mold, if necessary, may be made a shape of a cut-off blade, or may retain the layer of a stainless steel as it is. Or otherwise, an alloy of aluminum thereof may be made bare by cutting the layer of a stainless steel, a copper layer and a layer of pure aluminum.

A water cooling circuit is provided by machining at a part as close as possible to the surface of the metallic mold (the side of a stainless steel) so as to improve cooling efficiency.

By making the peripheral part of the mold cavity which part cuts burrs, a stock of stainless steel, the mold is provided with the hardness and durability required to cut off a resin, and by making a main body of the mold an alloy of aluminum, the mold is provided with thermal radiation, and thus a shot cycle thereof is purposed to improve.

### Examples 2

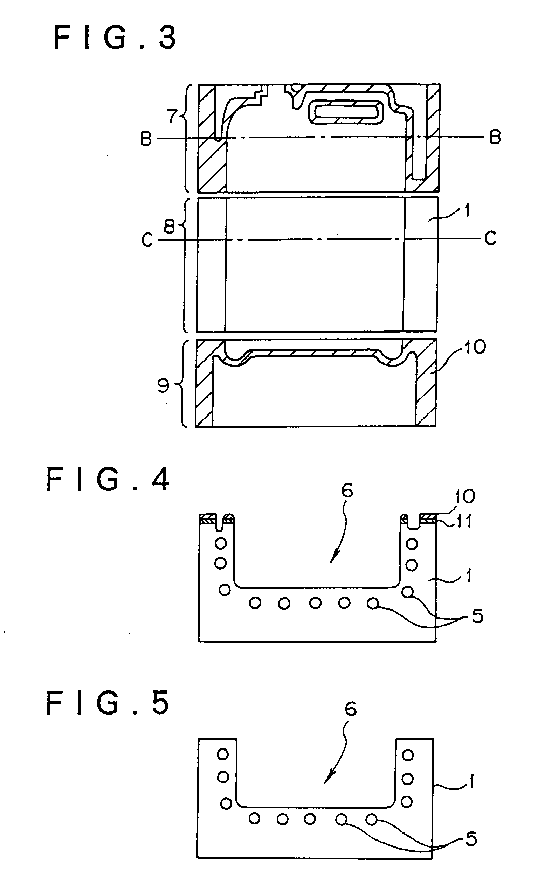

Fig. 3 shows a mold for blow molding of the bottle made of polyethylene having a handgrip. As in Example 1, the mold is formed into a shape of what is split into two symmetric metallic molds, and further each of the metallic mold has been split longitudinally into 3 pieces or segments of a component of the metallic mold. In this case, the metallic mold component (a split mold of an upper part of the bottle) 7 and the metallic mold component (a split mold of a bottom part of the bottle) 9 are composed of three layers as is shown in Fig. 4, wherein an alloy of aluminum is the main body 1, and a layer of titanium 11 as the intermediate metal is bonded thereto by explosive cladding, and further a layer of a highly hard steel 10 is bonded at the most external layer.

The metallic mold component (a split mold of a body part of the bottle) 8 is made of an alloy of aluminum proper. This is because in case of a bottle, no burr is generated at the body part thereof, and therefore there is no necessity of providing a highly hard material at the peripheral part of the cavity. The peripheral parts of the cavity at the bottle-neck part and the handgrip part of the metallic mold component (the split mold of an upper part of the bottle) 7, and at the metallic mold component (the split mold of a bottom part of the bottle) 9 retain edges of the peripheral parts (cut-off blades) for cutting burrs, whereas a layer of a highly hard steel at the surfaces of the other parts has been cut off and the surfaces of an alloy of aluminum are made bare.

As for this mold, by splitting only the parts thereof where burrs are generated, into components thereof, and as for each of the metallic mold components, as in Example 1, by making the peripheral part of the cavity a stock of highly hard steel, the mold is provided with the hardness and durability required to cut off a resin, and by making a main body of the mold an alloy of aluminum, the mold is provided with thermal radiation, and thus a shot cycle thereof is purposed to improve. And by employing an alloy of aluminum proper at the parts where no burr is generated, cost is purposed to be reduced.

### Example 3

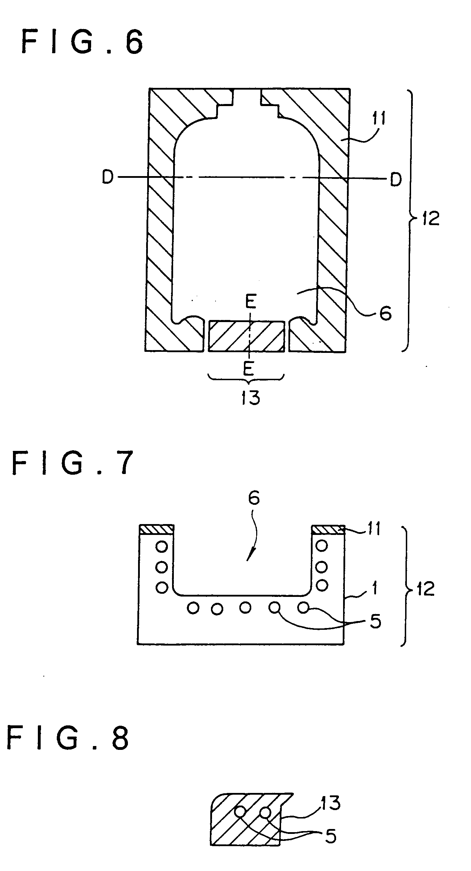

Fig. 6 shows a mold in case of blow molding a bottle made of polyvinyl chloride. The mold, as in Example 1, is formed into a shape of what is split into two symmetric metallic molds, and further each of the metallic molds has been split into the metallic mold component (a split mold proper) 12 and the metallic mold component (a nest of a bottom part) 13 as are shown in Fig. 6. In this case, the metallic mold component (the split mold proper) 12 is composed of two layers wherein an alloy of aluminum is a main body 1, and a layer of titanium 11 as the intermediate metal is bonded thereto by explosive cladding. The peripheral parts of the cavity retain along the parting line the layer of titanium 11 as it is so as to prevent corrosion thereof with a chlorine gas generated by heating a polyvinyl chloride.

In this Example, the peripheral part of the cavity of the component of the metallic mold (the split mold proper) 12 does not require machining into the shape of a cut-off blade since no burr of a resin is generated at this part.

The component of the metallic mold (the nest of the bottom part) 13 of this mold is made of a stainless steel proper. This is because when this mold is used for a long period of time, if the way of retaining a layer of titanium like a shape of a cut-off blade at the peripheral part of the bottom part of the bottle is adopted as is seen in Example 1, so as to cut off burrs of a resin generated at the bottom part of the bottle, durability of the mold is decreased because titanium has low hardness as compared with a stainless steel. Therefore, the component of the metallic mold (the nest of the bottom part) 13 obtained by machining a stainless steel proper which has an excellent anticorrosion property and hardness, though thermal conductivity (thermal radiation) thereof is lower, is dared to employ as the nest. In this case, the part of a stainless steel proper is restricted to a very small part, and therefore the influence thereby on the thermal radiation of the whole of the mold is small.

By splitting only the bottom part of a bottle of the metallic mold where burrs are generated into a metallic mold component, and by employing as the part what is obtained by machining a stainless steel, the hardness and durability required to cut off a resin is maintained. Further, as for the metallic mold component (the split mold proper), by using titanium at the peripheral parts of the cavity thereof, an anticorrosion property to a chlorine gas is enhanced. And by making a main body of the metallic mold component (the split mold proper) an alloy of aluminum, the component is provided with thermal radiation, and thus a shot cycle thereof is purposed to be improved.

### Industrial Applicability

The metallic mold or the component thereof for blow-molding of the present invention makes the cooling rate of the molded article high and enables a shortened cycle for molding. The surface thereof has a highly hard metal bond, and therefore an improvement in durability of a pinch-off part thereof can be attained. Moreover, since the highly hard metal is metallurgically bonded to the whole surface of the metallic mold, no machining such as that in a nest is necessary. Therefore, the time to deliver the metallic mold can be shortened and cost of machining thereof can be reduced. Further, since a bolting necessary in case of using a nest is not necessary, a water cooling circuit can be provided at a point as near as possible to the surface of a mold cavity and the surface of a parting line, and thus a high efficiency of cooling with water can be maintained.

## Claims

1. A metallic mold for blow-molding wherein at a peripheral part of a cavity established at a main body consisting of a highly thermally conductive metal, a layer of a highly hard metal metallurgically bonded to the main body is provided.

2. The metallic mold for blow-molding according to Claim 1, wherein the highly thermally conductive metal is at least one selected from the group consisting of aluminum, an alloy of aluminum, copper and an alloy of copper.

3. The metallic mold for blow-molding according to Claim 1, wherein the highly hard metal is at least one selected from the group consisting of a steel, a steel of a mold for plastic molding, a stainless steel, titanium, an alloy of titanium, nickel, an alloy of nickel and an alloy of beryllium-copper.

4. The metallic mold for blow-molding according to Claim 2, wherein the highly hard metal is at least one selected from the group consisting of a steel, a steel of a mold for plastic molding, a stainless steel, titanium, an alloy of titanium, nickel, an alloy of nickel and an alloy of beryllium-copper.

5. A metallic mold for blow-molding having as a component of the metallic mold at least one component of the metallic mold wherein at a peripheral part of a cavity established at a main body consisting of a highly thermally conductive metal, a layer of a highly hard metal metallurgically bonded to the main body is provided.

6. The metallic mold for blow-molding according to Claim 5, wherein the highly thermally conductive metal is at least one selected from the group consisting of aluminum, an alloy of aluminum, copper and an alloy of copper.

7. The metallic mold for blow-molding according to Claim 5, wherein the highly hard metal is at least one selected from the group consisting of a steel, a steel of a mold for plastic molding, a stainless steel, titanium, an alloy of titanium, nickel, an alloy of nickel and an alloy of beryllium-copper.

8. The metallic mold for blow-molding according to Claim 6, wherein the highly hard metal is at least one selected from the group consisting of a steel, a steel of a mold for plastic molding, a stainless steel, titanium, an alloy of titanium, nickel, an alloy of nickel and an alloy of beryllium-copper.

9. A method for producing a metallic mold for blow-molding wherein by employing a composite material which is obtainable by metallurgically bonding a layer of a highly hard metal onto the surface of a main body of a highly thermally conductive metal, forming a cavity by digging from the side of the highly hard metal into the main body, and thereby forming a layer containing the highly hard metal at a peripheral part of the cavity.

10. The method for producing a metallic mold for blow-molding according to Claim 9, wherein the highly thermal conductive metal is at least one selected from the group consisting of aluminum, an alloy of aluminum, copper and an alloy of copper.

11. The method for producing a metallic mold for blow-molding according to Claim 9, wherein the highly hard metal is at least one selected from the group consisting of a steel, a steel of a mold for plastic molding, a stainless steel, titanium, an alloy of titanium, nickel, an alloy of nickel and an alloy of beryllium-copper.

12. The method for producing a metallic mold for blow-molding according to Claim 10, wherein the highly hard metal is at least one selected from the group consisting of a steel, a steel of a mold for plastic molding, a stainless steel, titanium, an alloy of titanium, nickel, an alloy of nickel and an alloy of beryllium-copper.

13. A method for producing a component of a metallic mold for blow-molding wherein by employing a composite material which is obtainable by metallurgically bonding a layer of a highly hard metal onto the surface of a main body of a highly thermally conductive metal, forming a cavity by digging from the side of the highly hard metal into the main body, and thereby forming a layer containing the highly hard metal at a peripheral part of the cavity.

14. The method for producing a component of a metallic mold for blow-molding according to Claim 13, wherein the highly thermally conductive metal is at least one selected from the group consisting of aluminum, an alloy of aluminum, copper and an alloy of copper.

15. The method for producing a component of a metallic mold for blow-molding according to Claim 13, wherein the highly hard metal is at least one selected from the group consisting of a steel, a steel of a mold for plastic molding, a stainless steel, titanium, an alloy of titanium, nickel, an alloy of nickel and an alloy of beryllium-copper.

16. The method for producing a component of a metallic mold for blow-molding according to Claim 14, wherein the highly hard metal is at least one selected from the group consisting of a steel, a steel of a mold for plastic molding, a stainless steel, titanium, an alloy of titanium, nickel, an alloy of nickel and an alloy of beryllium-copper.
